# EUROPEAN PATENT SPECIFICATION

(11) **EP 0 426 123 B1**
(45) Date of publication and mention of the grant of the patent: **17.04.1996**
(21) Application number: 90120823.1
(22) Date of filing: 31.10.1990
(51) Int. Cl.: E21B 41/04, F16L 55/18

(54) **Module to deal with, extend and repair undersea lines, worked by remotely operated vehicle**
Bauteil zum Bearbeiten, Verlängern und Reparieren von Unterwasserleitungen, in Einsatz gebracht durch ein fernbedientes Fahrzeug
Module pour le traitement, l'extension et la réparation de tuyauteries sous-marines, destiné à être placé par un véhicule commandé à distance

(30) Priority: 01.11.1989 BR 8905595
(43) Date of publication of application: 08.05.1991
(73) Proprietor: PETROLEO BRASILEIRO S.A. - PETROBRAS, Rio de Janeiro (BR)
(72) Inventor: Salvi Dos Reis, Ney Robinson, Rio de Janeiro (BR)
(74) Representative: Barlow, Roy James

(56) References cited:
- DE-B- 1 930 631
- FR-A- 2 327 473
- US-A- 4 784 523

## Description

This invention concerns a system to deal with and extend and repair undersea lines to be worked on by remotely operated vehicles so as to enable oil, gas and hydrocarbons in general, flowing in a pipeline system laid below the reach of known conventional saturation diving methods, to be dealt with for repair, extension and maintenance purposes with the aid of remotely operated vehicles (ROVs) and suitable interfaces.

As is well known a great many pipelines running along the bottom of the sea are likely to have to undergo repairs because of damage of various kinds suffered by them; they may for instance be cut by anchors, there may be leakage of fluid from inside the lines because of welding flaws and also due to damage caused by a lack of cathodic or anti-corrosion protection.

Those well versed in this art also know that much has been done towards achieving a system to deal with the repair of undersea lines in a way sufficiently efficient to meet the requirements of well-known operators and concerns working in this field. Among the systems known and in development at present are:-
a) the "CAMERON" system, which makes use of a mechanical connector, cold forged at a pressure of about 1400 kg/cm, and it is used with some aid from divers or remotely operated vehicles acting only upon the pipe to be repaired, spreading it into the coupling grooves and aligning itself with the pipeline. When it is fixed on to the pipeline it also gives rise to a metal structure base which acts as a guide in the remedying of any fresh stretch of pipe, this being a system that might become part of a wider repair system;
b) The "SNAM" system which is an all-encompassing undersea pipeline repair system provided with accessories meant to clean, cut and align the pipeline with the aid of ROVs and a boat fitted with dynamic positioning. It makes use of a cold forging system along with deformation of pipe and connector, namely mechanical action, without use of any elastomers. Deformation takes place in both parts to be joined in that the pipe is expanded into the connector, which also expands, but the connector material tries to return to its former state more strongly than does the pipe, which adds to the effect of such action because of the different properties of the two metals. This system seals better than does the CAMERON forged connector system, since several interference grooves come into being, thereby increasing interaction of the bodies concerned. This system is disclosed in U.S. Patent 4.648.626 of March 10, 1987.
c) The "ALSTHOM" system is a fully designed system provided with accessories to cut and to clean both inside and outside to remove concrete and casing and employs a mechanical connector, only the end of the pipe being cold forged. The collar so formed provides the metal-to-metal seal with the connector and use is made of a forging process which is more complicated and less reliable in terms of average and long term life than for the CAMERON and SNAM systems previously referred to;
d) The "HYDROTEC" system makes use of Atmospheric Diving System (ADS) diving gear belonging to "Oceaneering". This system employs mechanical connectors adjusted with the aid of a manipulator - BMF (Bottom Manipulating Frame);
e) The "ELF EQUITAINE" system is one that is part of, and further to, the "ALSTHOM" system referred to above. Mechanical connectors are used and they are laid on pipes that have had cold forging treatment;
f) The "IRDS" (International Robotics Diving System) system which uses the undersea pipeline aligning and repair supporting THOR system, which has many accessories that make it quite a practical system, the connecting and/or repairs being done by TIG orbital welding which requires the aid of divers.

From the foregoing it will be concluded that the present trend is to rely ever-increasingly on the use of mechanical connectors, which are able to remedy evaluations, take up misalignments, and even be reused if wanted. The disadvantage of such technique is that certain kinds of connectors employ gaskets and/or elastomers for sealing purposes, and these are likely to age and even to leak after some time.

Furthermore, in spite of hyperbaric welding having been made use of for the great number of undersea pipeline repairs done up to now, it is the general opinion that, in addition to being complicated because of the safety of the men engaged in such work, repairs carried out with this technique also seriously curb any automation of the process because of the environmental factors that directly affect the quality and the final result of the repairs done. It is generally acknowledged that repairs which follow this technique are hardly feasible in deep waters (400 m) without the aid of divers, which means that repairs done with mechanical connectors are to be preferred in deep waters since they are more easily automated.

This invention provides a system to intervene with to extend and to repair undersea pipelines which is worked by an ROV and which is meant for great depths in the sea, where it is impossible to work with divers, thus enabling a pipeline system in which oil, gas and hydrocarbons in general flow, but which is beyond the reach of known and conventional saturation diving methods, to be dealt with for repair, extension and maintenance purposes with the aid of ROVs and suitable interfaces.

Accordingly the invention provides a device for use in repairing or extending undersea lines, with the features of claim 1.

The invention provides for a system of integrated pipelines and connector modules, the connector modules being the heart of the system and consisting essentially of a metallic (modular) structure which houses a pipeline loop with a by-pass in its upper part and connectors fitted with valves at the ends thereof. The connector modules will be linked up to the ends of a previously laid pipeline or with a stretch of line to be repaired, loop ends as well as all other stretches of the pipeline being fitted with forged mechanically-operated connectors thus facilitating access to all connectors which match one another.

In the upper part of the connector module there may be a stand-by T branch-off to enable other connections to be made to the pipelines in operation whether needed as a hot-tap or whether because of some mishap to any either up- or down-stream stretch of the line. Such a connector acts as a by-pass for a new stretch of pipe which, when connected to the stand-by T and after the appropriate valves have been operated, enables flow of product to resume promptly and the damaged stretch of pipe to be withdrawn and repaired. There is also the advantage of being able to repair or replace smaller lengths of pipe without there being any pressure there, while production flow still goes on.

With the aid of the presently proposed system the time needed to carry out repairs on a pipeline will become noticeably less, which means running costs will drop and, if desired, production can recommence much more swiftly than is usual thus bringing about substantial saving and improved safety for both plant and those who use it.

A further considerable advantage of the connector module is that not only does it make use of the tolerances claimed by the makers of the connectors already on the market but also the loop of pipe inside the metal structure can be shifted in three ways by hydraulic devices, which means that the ends thereof can be adjusted in three dimensions and not only just rectilinearly as in the existing systems. This leads to a volume within which remaining pipe ends can be adjusted as required and all misalignments, whether axial, longitudinal, or elevational are taken up.

Other objects, features and advantages of this invention will now be made clearer from the following description given with reference to the accompanying drawings in which:-
Figure 1 is an enlarged perspective view showing the connector module used in the system of this invention;
Figure 2 is an enlarged front view of the connector module shown in Figure 1;
Figure 3 is a diminished perspective view of the metal structure of the connector module, showing the hydraulic devices which enable three-dimensional adjustment of the ends thereof;
Figure 4 shows how replacement in an undersea pipeline (the major purpose of the intended system) takes place by use of the connector module of the present invention; and
Figure 5 shows how a damaged stretch can be replaced, and a new one put in, within a system incorporating this invention from the outset.

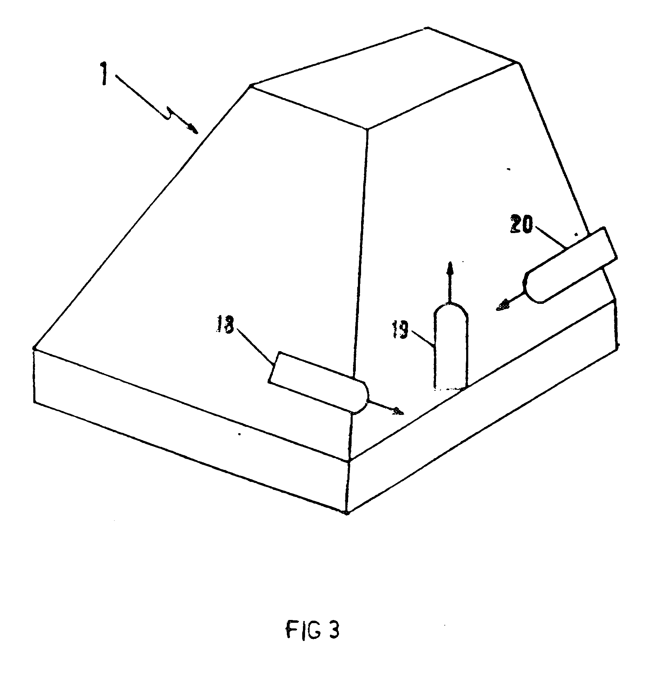

As is to be seen from the Figures, this system of dealing with, and extending and repairing undersea lines, with the aid of an ROV means that the undersea pipeline has to be provided with connector modules consisting of a metal (modular) structure 2 made of a substance, preferably carbon steel, suitable for the environment concerned. A loop of pipe 3, preferably made of special steel, or being a flexible pipe, is housed on the structure 2 and has forward 4 and rear 5 ends which are fitted with valves 6 worked by an ROV and forged connectors 7. The upper part of the structure 2 is fitted with an optional stand-by T branch-off, and the metallic structure 2 is also provided laterally with hot-lines 9 through which to apply hydraulic signals to work the hydraulic devices 18, 19, 20 (Figure 3) which enable three-dimensional adjustment of each of the pipe ends of the connector module 1 to take place.

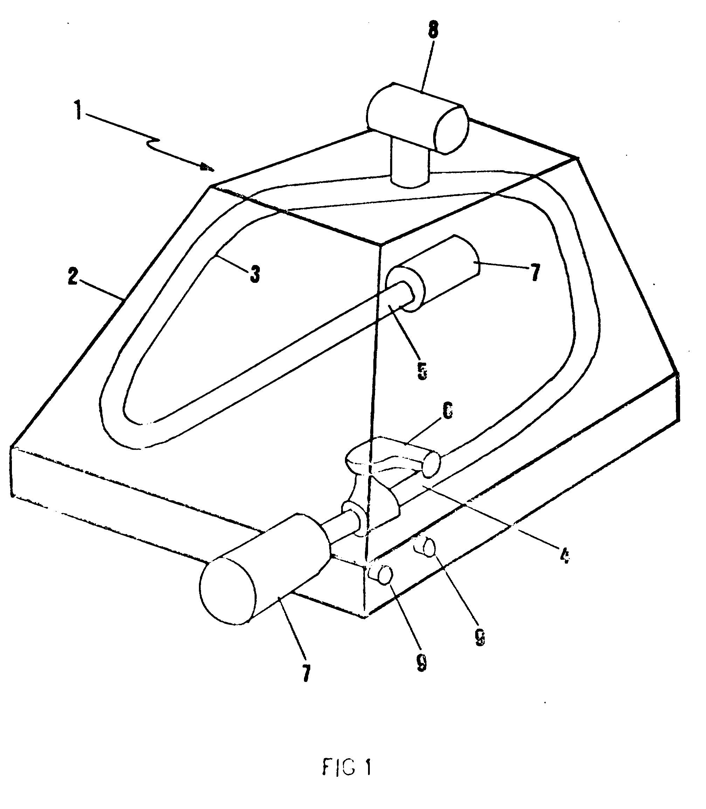

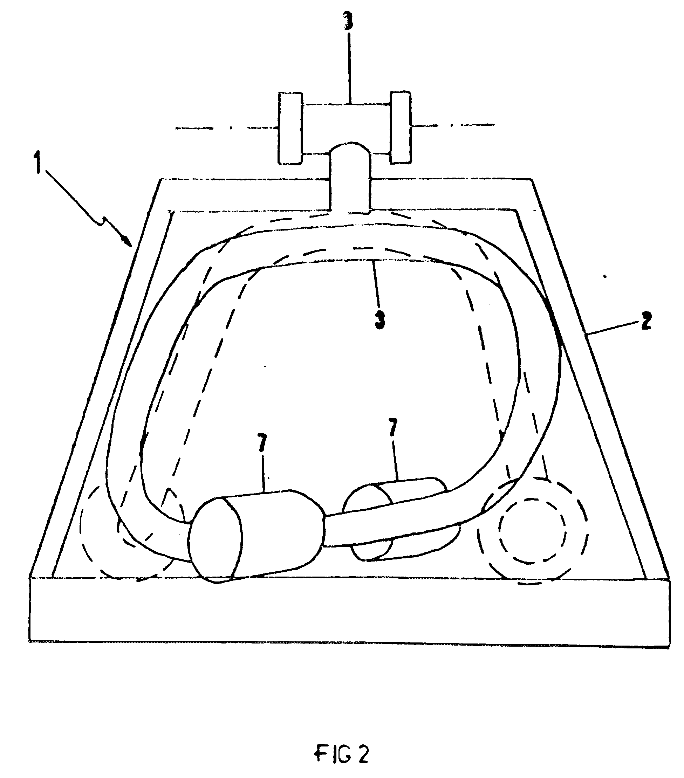

It should also be pointed out that, although not shown in Figures 1 and 2, the end 5 of the pipe 3 at the rear of the module has a valve upstream of the forged connector 7 and is operated by an ROV by way of a hot line; also, the stand-by T branch-off 8 has at its end valves which are to be operated by such ROV by way of hot lines, and has forged connectors.

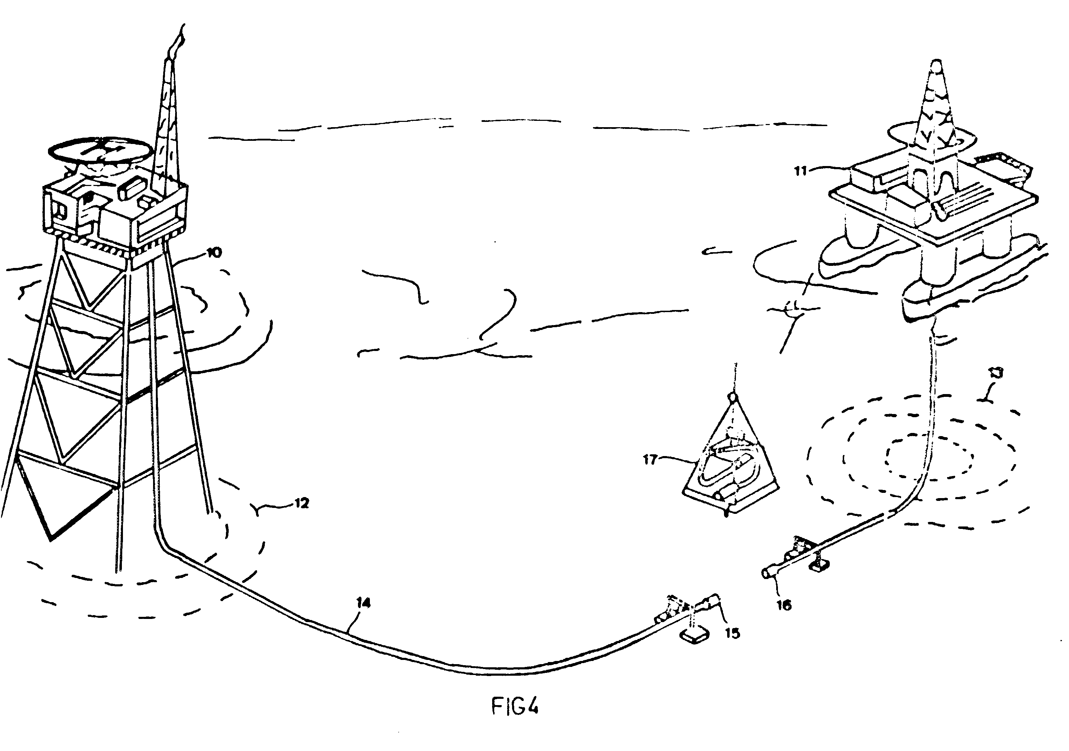

Figure 4 shows how a damaged stretch of undersea pipeline is replaced with the aid of a connector module system of this invention, dropped off from a ship. Figure 4 shows production platforms 10 and 11 and risk zones 12 and 13. The job of replacing part of such undersea pipeline 14 takes place in the following stages:-
a) pipeline 14 is drained of fluid and purged;
b) the damaged stretch is withdrawn;
c) ends are prepared and forged connectors 15, 16 are installed;
d) a connector module 17 with ends already adjusted is dropped;
e) a first alignment of the connector module 17 with the ends 15, 16 of the line takes place, with the aid of pre-established guides;
f) the hydraulic drive of the connector module is operated by ROV to effect fine adjustment 18, 19, 20 (Figure 3) of the coupling at one end of the module, horizontally (18), vertically (19), and longitudinally (20);
g) the ROV operates the mechanism of the connector means to close at that end;
h) the same procedure (steps f and g) takes place at the other end of the module by means of a second set of hydraulic adjustment means connected to hot lines (not shown) on the other side of the module (1);
i) connectors are tested;
j) pigs are run through; and
k) the pipeline resumes operation.

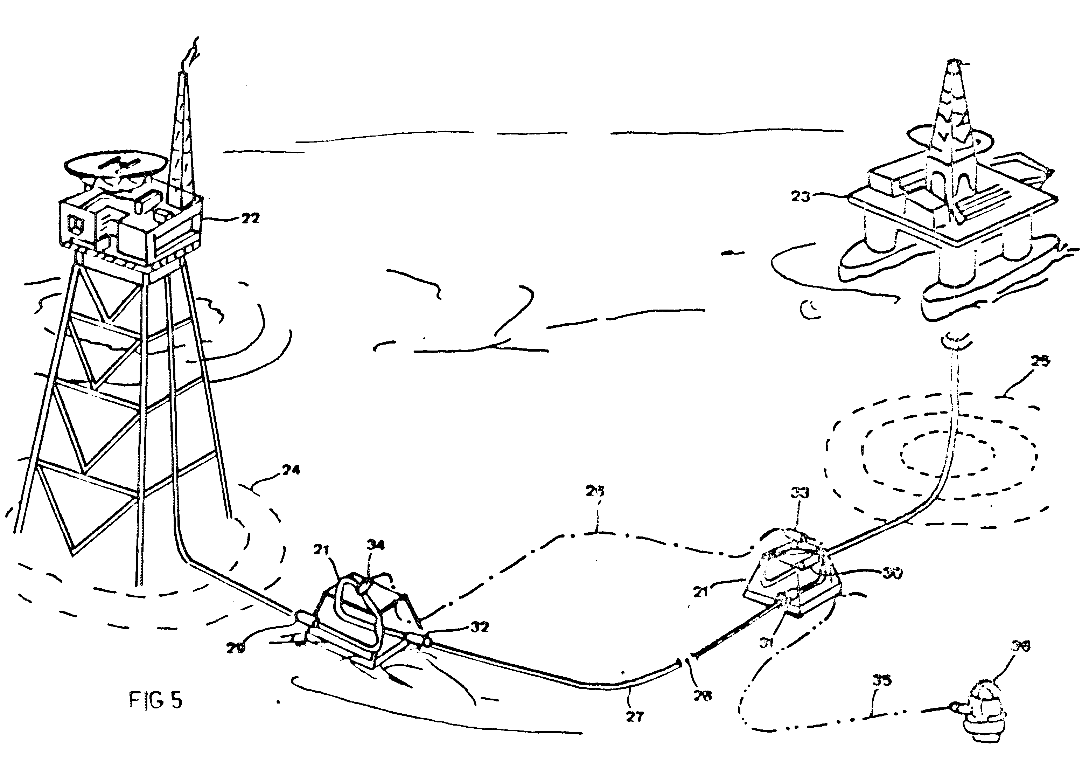

Figure 5 shows a further advantage of the present system when fitted with two connector modules 21 to change a stretch of damaged undersea line. Like Figures 1 and 2, Figure 5 does not show the forward and rear ends of the loop of pipe, nor the ends of the T branch-off of the connector module, as being fitted with valves worked by an ROV and does not show the forged connectors. This Figure does show production platforms 22 and 23, risk zones 24 and 25, an emergency by-pass 26, the undersea pipeline 27 and the damaged area 28. The stages in the changing of a damaged undersea line within a system already fitted with such components will now be given:-
a) the damaged area 28 is found with the aid of the ROV;
b) valves at 29, 30 are shut with the aid of the ROV using the first set of hot lines of each module;
c) valves at 31 and 32 are closed with the aid of the ROV using the second set of hot lines;
d) emergency by-pass line 26 is dropped from the rig;
e) connections at 33 and 34 are made with the aid of the ROV;
f) valves at 29, 34, 33 and 30 are opened;
g) connectors at 31, 32 are disconnected in order to withdraw the damaged line, and then the line is hauled up.

Also, there is a third advantage in that when a new undersea line has to be added to a system already fitted with such components, or when a line has been for some reason fitted with a repair module as shown in Figure 5 where 35 is the new line and 36 the new well, such an operation is easily and efficiently carried out. All that is needed is to lay the fresh undersea line from the well 36, to link it up with the line at 33, to open valve 36 and to open valve 33.

The main feature of this invention is that pipe end misalignments can be taken up without the need for any large scale devices to move them back into their original position.

## Claims

1. A device for use in repairing or extending undersea lines, characterised by comprising a module body (1) containing a pipe (3) having at its ends releasable connector means (7) to connect the pipe (3) to an undersea line to be repaired or extended, said pipe having its ends at opposite ends of the module body and valves (6) operative to close off said pipe; the device further comprising means for adjusting said pipe ends spacially in three dimensions, and hot lines (9) connected to said valves (6) and to said adjusting means and accessible to a remotely operated vehicle (ROV) to allow said remotely operated vehicle, (ROV) to be used to operate said valves and to adjust the position of said pipe ends spacially in three dimensions in order to facilitate connections between said releasable connector means (7) and misaligned ends (15,16) of the pipe to be repaired.

2. A device according to claim 1, characterised in that said pipe (3) is looped in its extent between said opposite ends of the module body (1).

3. A device according to claim 1 or 2, characterised in that said means which enable each of said ends of the pipe to be adjusted spacially are hydraulic means.

4. A device according to claim 3, characterised in that said hydraulic means are connected to said hot-lines (9) which are fitted laterally of said module body, in order to be accessed by the remotely operated vehicle (ROV).

5. A device according to any one of the preceding claims characterised by the fact that the module body (1) further has in its upper portion a stand-by T branch-off fitted at its end with valves and with connectors to be worked by a remotely operated vehicle (ROV).

6. The use of a device according to any one of the preceding claims to repair a pipeline, characterised by taking up misalignment of said pipe ends with ends of pipe to be repaired by adjusting tridimensionally the position of said pipe ends, without bringing back to their original position displaced pipes to be repaired by use of any large scale devices;

## Patentansprüche

1. Vorrichtung zur Verwendung beim Reparieren oder Verlängern von Unterwasserleitungen, dadurch gekennzeichnet, daß sie einen Modulkörper (1) aufweist, der ein Rohr (3) enthält, welches an seinen Enden lösbare Verbinder-mittel (7) hat, um das Rohr (3) an eine zu reparierende oder zu verlängernde Unterwasserleitung anzuschließen, wobei die Enden des Rohres an gegenüberliegenden Enden des Modulkörpers liegen und das Rohr Ventile (6) hat, die wirksam sind, das Rohr abzuschließen, wobei die Vorrichtung weiterhin Mittel aufweist für räumliches Einstellen des Rohrendes in drei Dimensionen sowie Hotlines bzw. Anschlüsse (9), die mit den Ventilen (6) und mit den Einstellmitteln verbunden sind und zu einem fernbetätigten Fahrzeug (ROV) zugänglich sind, um zu ermöglichen, daß das fernbetätigte Fahrzeug (ROV) dazu verwendet wird, die Ventile zu betätigen und die Position der Rohrenden räumlich in drei Dimensionen einzustellen, um Verbindungen zwischen den lösbaren Verbindermitteln (7) und nicht oder falsch ausgerichteten Enden (15,16) des zu reparierenden Rohres zu erleichtern.

2. Vorrichtung nach Anspruch 1, dadurch gekennzeichnet, daß das Rohr (3) in seiner Erstreckung zwischen den gegenüberliegenden Enden des Modulkörpers (1) in Schleifenform vorliegt.

3. Vorrichtung nach Anspruch 1 oder 2, dadurch gekennzeichnet, daß die genannten Mittel, die ein räumliches Einstellen jedes der Enden des Rohres ermöglichen, hydraulische Mittel sind.

4. Vorrichtung nach Anspruch 3, dadurch gekennzeichnet, daß die hydraulischen Mittel mit den Hotlines (9), die seitlich des Modulkörpers angepaßt sind, verbunden sind, um von dem fernbetätigten Fahrzeug (ROV) zugänglich zu sein.

5. Vorrichtung nach irgendeinem der vorhergehenden Ansprüche, dadurch gekennzeichnet, daß der Modulkörper (1) weiterhin in seinem oberen Teil ein T-Bereitschafts- oder -reserveabzweigstück hat, welches an seinem Ende mit Ventilen und mit Verbindern versehen ist derart, daß diese durch ein fernbetätigtes Fahrzeug (ROV) betrieben werden können.

6. Verwendung einer Vorrichtung nach irgendeinem der vorhergehenden Ansprüche zum Reparieren einer Rohrleitung, gekennzeichnet durch Aufnehmen bzw. Beseitigen von fehlender Ausrichtung oder Falschausrichtung der Rohrenden mit zu reparierenden Rohrenden durch dreidimensionales Einstellen der Position der genannten Rohrenden ohne Zurückbringen der zu reparierenden verschobenen Rohre in ihre ursprüngliche Position durch Verwendung irgendeiner Vorrichtung großer Abmessungen.

## Revendications

1. Dispositif destiné à être utilisé pour la réparation ou l'extension de lignes sous-marines, caractérisé en ce qu'il comprend un corps formant module (1) contenant une canalisation (3) pourvue, au niveau de ses extrémités, de moyens formant raccords amovibles (7) pour raccorder une canalisation (3) à une canalisation sous-marine devant être réparée ou étendue, les extrémités de ladite canalisation étant situées sur des extrémités opposées du corps formant module, et des vannes (6) agissant de manière à fermer ladite canalisation, le dispositif comprenant en outre des moyens pour régler lesdites extrémités de la canalisation, en particulier dans trois dimensions, et des conduits d'activation (9) raccordés auxdites vannes (6) et auxdits moyens d'ajustement et accessibles pour un véhicule télécommandé (ROV) de manière à permettre l'utilisation dudit véhicule télécommandé (ROV) pour actionner lesdites vannes et ajuster la position desdites canalisations d'extrémité, et ce spatialement dans trois dimensions, afin de faciliter les raccordements entre lesdits moyens de raccordement amovibles (7) et les extrémités désalignées (15,16) de la canalisation à réparer.

2. Dispositif selon la revendication 1, caractérisé en ce que ladite canalisation (3) forme une boucle sur son étendue entre lesdites extrémités opposées du corps formant module (1).

3. Dispositif selon la revendication 1 ou 2, caractérisé en ce que lesdits moyens, qui permettent d'ajuster spatialement chacune desdites extrémités de la canalisation, sont des moyens hydrauliques.

4. Dispositif selon la revendication 3, caractérisé en ce que lesdits moyens hydrauliques sont connectés auxdites conduits d'activation (9), qui sont montés latéralement sur ledit corps formant module, de manière que le véhicule télécommandé (ROV) puisse y accéder.

5. Dispositif selon l'une quelconque des revendications précédentes, caractérisé en ce que le corps formant module (1) comporte en outre, dans sa partie supérieure, une dérivation de réserve, dont les extrémités sont équipées de vannes et de raccords devant être manipulés par un véhicule télécommandé (ROV).

6. Utilisation d'un dispositif selon l'une quelconque des revendications précédentes pour réparer une canalisation, caractérisée en ce qu'on supprime le défaut d'alignement desdites extrémités de canalisation avec les extrémités de la canalisation devant être réparée, au moyen d'un ajustement tridimensionnel de la position desdites extrémités de la canalisation, sans ramener, dans leur position initiale, des canalisations décalées devant être réparées par l'utilisation de n'importe quel dispositif de grande taille.
